# EUROPEAN PATENT APPLICATION

(11) **EP 3 113 139 A1**
(43) Date of publication of application: **04.01.2017**
(21) Application number: 15306050.4
(22) Date of filing: 30.06.2015
(51) Int. Cl.: G08C 17/00, G06F 3/0484

(54) **UPDATING OF FORMER INSTRUCTIONS TO CONTROL A REMOTE ELECTRONIC DEVICE**

(71) Applicant: Orange, 75015 Paris (FR)
(72) Inventor: RIERA, Julien, 92130 Issy Les Moulineaux (FR); ROTH, Lukasz, 43-300 Bielsko-Biala (PL)
(74) Representative: Cabinet Plasseraud

(57) **Abstract**

The invention relates to a method for managing a remote electronic device using a user interface on an electronic device, the method comprising:
outputting (200) a history list of former instructions, each former instruction comprising at least one selectable argument having a former argument value;
receiving (201) a first user input on a first selectable argument of a first former instruction;
retrieving (202) at least one alternative argument value for the first selectable argument, the first selectable argument having a first former argument value;
outputting (203) a list of argument values comprising the first former argument value and the alternative argument value;
receiving (204) a second user input on a current argument value of the outputted list of argument values;
updating (205) the first former instruction based on the first argument value to generate a new instruction;
remotely controlling (207) the remote electronic device using the new instruction

## Description

The present invention generally relates to the control of remote electronic devices, such as connected objects for example.

It finds applications in electronic devices such as laptops, touchpads, mobile phones, Smartphones, wearable devices or smart watches.

In what follows, we consider, for illustrative purpose exclusively, electronic devices as mobile phones and remote electronic devices as connected objects.

Connected objects can be remotely controlled by mobile phones, for example by means of an application installed in the mobile phones providing a user interface.

It is meant by *"connected object*" any object able to perform a given function, according to optional parameters, and comprising a network interface to access an access point, thereby accessing a remote server (through a network such as the internet for example or a local Bluetooth network), or to receive commands from a mobile phone (or any electronic device).

For example, a connected coffee machine can perform basic functions such as *"switch on*" and *"switch off'.* However, *"switch on*" can encompass several functions such as "*prepare a latte coffee*", "*prepare an expresso*"*,* "*prepare a cappuccino".* In addition, each device and function can also be associated with parameters. For example, the parameters can be a volume of the coffee to be prepared. The parameters may therefore comprise *"2 centilitres*", *"5 centilitres*", etc.

Electronic devices such as mobile phones that are used to remotely control connected objects now provide several ways to receive a user input and to turn it into an instruction for a remote connected objet : touch display, keypad, microphone coupled with a speech-to-text application, etc.

The user therefore needs to indicate information that enables the mobile phone to generate an instruction for the remote connected object.

Such information can be communicated using complementary arguments of different types :
- a device identifier to identify the connected objet to be controlled or the group of connected objects to be controlled;
- a function identifier to identify the function to be performed by the identified connected object;
- optionally, a parameter identifier identifying a parameter of the identified function to be performed by the identified connected objet.

To indicate this information, argument values can be included in a user input such as a sentence *"could you switch-on the bedroom light in blue".* This sentence comprises three arguments, of different types : a device identifier having the value *"bedroom light*", a function identifier having the value "*switch-on*" and a parameter identifier having the value "*blue*"*.*

However, as the size of these electronic devices is a growing concern, their screens tend to be smaller and smaller. In particular, areas intended to receive user inputs are particularly small. Moreover, some specific users (children, elders, etc.) can have trouble inputting data in these small and condensed input areas.

To address this need, a first aspect of the invention concerns a method for managing a remote electronic device using a user interface on an electronic device, the method comprising:
outputting on the electronic device a history list of former instructions, each former instruction comprising at least one selectable argument, the selectable argument having a former argument value;
receiving a first user input on a first selectable argument of a first former instruction;
retrieving at least one alternative argument value for the first selectable argument of the first former instruction, the first selectable argument having a first former argument value;
outputting a list of argument values comprising the first former argument value and the at least one alternative argument value;
receiving a second user input on a current argument value of the outputted list of argument values;
updating the first former instruction based on the first argument value to generate a new instruction; and
remotely controlling the remote electronic device using the new instruction.

No restriction is attached to the former instructions of the history list. For example, it encompasses instructions that are issued from user inputs previously entered by the user. It can also encompass past instructions made by other users, and notifications or actions from a service platform.

In addition, controlling the remote electronic device may comprise controlling a group of remote electronic devices.

Therefore, the method enables to reuse former instructions to remotely control an electronic device. By means of two user inputs (such as two inputs on a press button, or on a touch display for example), the user can update a former instruction to generate a new instruction. The control by the user is thereby facilitated and accelerated.

According to some embodiments of the invention, if the first selectable argument is a device identifier and the first former argument value and each of the argument values of the list identify respective electronic devices, then the controlled remote electronic device can be identified by the current argument value.

Therefore, the user can quickly and efficiently select an electronic device to be remotely controlled. A device identifier may also identify a group of electronic devices. For example, the device identifier *"all the lights"* refer to the group of lights of the user.

Alternatively or in complement, if the first selectable argument belongs to a first type of argument being different from a device identifier type and the first former instruction further comprises a device identifier value, then the device identifier value can be included in the generated new instruction and the controlled remote electronic device can be identified by the device identifier value.

Therefore, the user can quickly and efficiently select a function to be performed by a remote electronic device.

In complement, the first type of argument can be a function identifier type, and the current argument value can identify a function to be performed by the remote electronic device.

Then, the user may reuse a former instruction to a same remote electronic device he wants to currently control, without the need to input any device identifier.

According to some embodiments of the invention, controlling the remote electronic device may comprise sending the new instruction to the remote electronic device.

In complement, the new instruction can be sent to the remote electronic device upon validation by the user on the user interface.

This enables to avoid erroneous manipulations by the user.

This validation step by the user is optional. For example, the instruction can be automatically validated after expiration of a timer.

A second aspect of the invention concerns a computer program product recorded on a storage medium and executable by a computer in the form of a software including at least one software module setup to implement the method according to the first aspect of the invention.

A third aspect of the invention concerns an electronic device for managing a remote electronic device using a user interface, the electronic device comprising:
a processor configured to output on the user interface a history list of former instructions, each former instruction comprising at least one selectable argument, the selectable argument having a former argument value;
a user interface configured to receive a first user input on a first selectable argument of a first former instruction, the first selectable argument having a first former argument value.

The processor is further configured to retrieve at least one alternative argument value for the first selectable argument of the first former instruction and to output a list of argument values comprising the first former argument value and the at least one alternative argument value, the user interface is further configured to receive a second user input on a current argument value of the outputted list of argument values and the processor is further configured to update the first former instruction based on the current argument value to generate a new instruction and to remotely control the remote electronic device using the new instruction.

The present invention is illustrated by way of example, and not by way of limitation, in the figures of the accompanying drawings, in which like reference numerals refer to similar elements and in which:
- Figure 1 represents a system according to some embodiments of the invention;
- Figure 2 is a flowchart illustrating the steps of a method according to some embodiments of the invention;
- Figures 3a to 3d illustrate a graphical user interface of a user terminal according to some embodiments of the invention;
- Figure 4 illustrates a user terminal according to some embodiments of the invention.

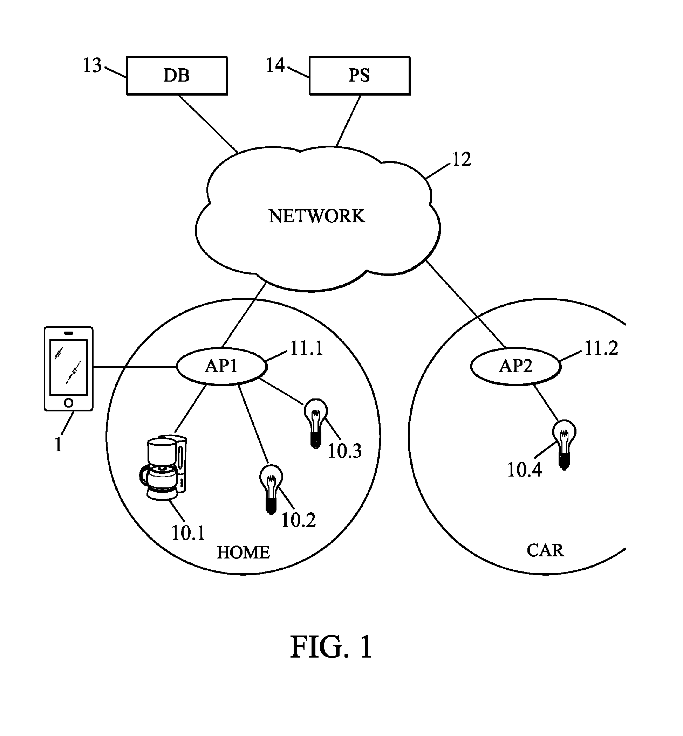

Figure 1 illustrates a system according to some embodiments of the invention.

The system comprises an electronic device 1 such as a user terminal. As illustrated on Figure 1, the electronic device 1 can be a mobile phone such as a Smartphone. The invention is not limited to this illustrative example, and also encompasses touch pads, laptops, desktop computers, etc.

The electronic device 1 can be used by the user to control remote electronic devices such as connected objects. In what follows, "*remote electronic devices*" are called "*connected objects*", for illustrative purposes.

The user of the electronic device 1 (also called *"user terminal 1*" hereafter) may have several connected objects located in different places :
- a connected coffee machine 10.1 located at home;
- a bedroom light 10.2 located at home;
- a kitchen light 10.3 located at home;
- a car light 10.4 located in a car.

Connected objects 10.1-10.3 are configured to access to a first access point 11.1 and connected objet 10.4 is configured to access to a second access point 11.2. No restriction is attached to the access technology used by the connected objects: wired or wireless means can be envisaged. In what follows, we consider the first and second access points as being Wi-fi access points.

Through the access points 11.1 and 11.2, the connected objects can access a network 12, such as the internet, and communicate with a remote service platform 14, for example to upload events or to receive instructions. Alternatively, the network 12 can be a local Bluetooth network and the remote service platform 14 is replaced by a local management entity. Several respective service platforms can also be envisaged for the different connected objects 10.1 to 10.4, and a unique service platform 14 has been represented for illustrative purposes exclusively.

The service platform 14 can also be accessed by the user terminal 1. For example, the user terminal can connect the access point 11.1 when the user is at home. Alternatively, the user may use a 3G/4G mobile network to access the service platform 14 with the user terminal 1.

An application dedicated to the service platform 14 can be installed on the user terminal 1. Through this application, the user may enter user inputs that are converted to instructions. The instructions can then be used to control the connected objects 10.1-10.4. To this end, the instructions may be forwarded to the service platform 14, which then forwards (and optionally modifies or enriches) the instructions to the targeted connected objects 10.1-10.4.

The user terminal 1 is also operatively connected to a database 13. On figure 1, the database 13 can be accessed through the network 12. Alternatively, the database 13 can be stored in the user terminal 1 or can be integrated in the service platform 14.

The database 13 may store associations between argument types and alternative argument values.

As explained above, the argument types may comprise the argument types such as *"device identifier*", "*function identifier*" and optionally "*parameter identifier*". Other argument types may also be envisaged within the scope of the present invention.

For example, for the user, the database may store the identifiers of all the connected objects 10.1-10.4 (which are therefore alternative argument values) in association with the argument type *"device identifier*". No restriction is attached to the device identifier, which can be a numerical code or a character string, such as *"bedroom light',* "*kitchen light*", etc. All the possible functions (which are also alternative argument values) of the connected objects of the user are also stored in association with the argument type *"function identifier*". For example, the alternative functions *"switch on*", *"switch off*", "*prepare a cappuccino",* "*prepare an expresso*", "*ring*", etc, can be stored in association with the argument type *"function identifier*"*.* The device identifier may also identify several connected objects or a group or cluster of connected objects (all the lights for example).

The database 13 also stores a compatibility mesh between the alternative argument values for a given type, and contextual data.

Then, from an argument type, alternative argument values can be obtained. By further providing contextual data, the alternative argument values can be filtered using the compatibility mesh. No restriction is attached to the format of the compatibility mesh. It is meant by "*compatibility mesh",* any data structure that links elements that are compatible together. Based on a given element, it is possible to retrieve all the other elements that are linked to this given element in the compatibility mesh.

No restriction is attached to the format of the compatibility mesh. Such a compatibility mesh can be configured by the user, for example using the user terminal 1 or any device that is adapted to access the database 13.

Alternatively, the compatibility mesh can be configurable by another person than the user (for example a parent in case the user is a child, or any person being entitled to manage the compatibility mesh of the user). The compatibility mesh may also be configurable by a manufacturer of some of the connected objects, or by the service platform 14.

The system illustrated on figure 1 is only provided for illustrative purposes. For example, the network used to control the connected objects 10.1-10.4 can be a local access network, such as a Bluetooth network for example, and, in that case, there is no need to access to a remote service platform.

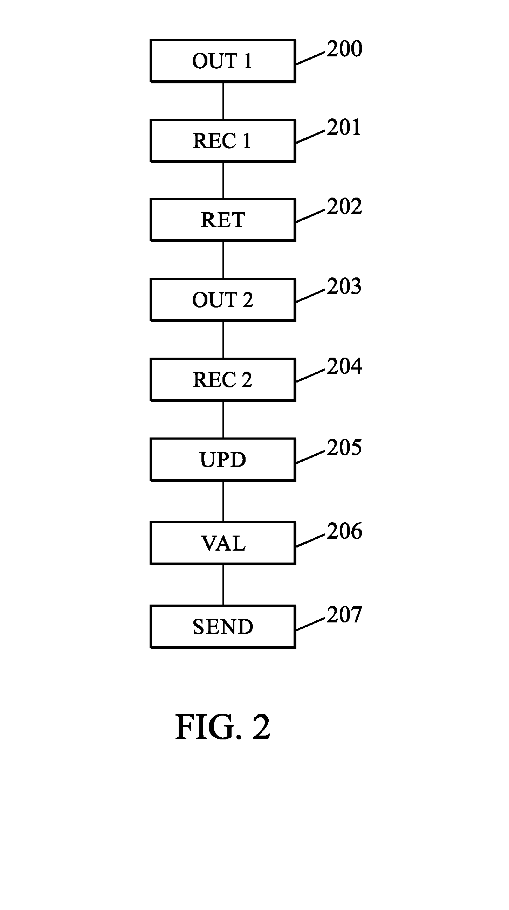

Figure 2 is a flowchart illustrating the steps of a method according to some embodiments of the invention.

At step 200, a history list of former instructions is outputted on user terminal 1. The list of former instructions comprises at least one instruction that has been previously used to remotely control one of the connected objects 10.1-10.4. The former instructions also encompass actions or notifications of actions performed by the service platform 14 (or by a local management entity), such as *"the heater has been set to 23 degrees"* for example. Still in complement, the history list may comprise former instructions previously input by other users. At least one of the former instructions comprises a selectable argument, the selectable element being an element that can be selected by the user using the user interface of the user terminal 1. The selectable argument has a former argument value that can be any from a device identifier value, a function identifier value or a parameter identifier value. A device identifier value identifies one of the connected objects 10.1-10.4 (or a group of connected objects), a function identifier value identifies a function to be performed by a connected objet and a parameter identifier value identifies a parameter of a function to be performed by a connected objet.

At step 201, a first user input is received on a first selectable argument of a first former instruction, the selectable argument having a first former argument value. No restriction is attached to the first user input, which can be a click or a double click on a press button, on a touch display using a finger or a pen, or a detection by a proximity sensor, an input on a wheel button, etc.

At step 202, at least one alternative argument value for the first selectable argument is retrieved. For example, in case the first selectable argument is a device identifier value identifying the kitchen light 10.3, the alternative argument values can be device identifier values identifying the bedroom light 10.2, the coffee machine 10.1 and the car light 10.4.

In addition, the alternative argument values can be filtered based on contextual data and the compatibility mesh. For example, in case contextual data indicating that the user is at home is retrieved, then the device identifier value of the car light 10.4 is excluded from the alternative argument values. No restriction is attached to the way contextual data is retrieved. For example, it can be input by the user, acquired by a sensor of the user terminal 1 or retrieved from an external server for example.

No restriction is attached to the way the alternative argument values are obtained. For example, they can be retrieved from the database 13, which stores associations between argument types and alternative argument values. In that case, the argument type *"device identifier*" is transmitted to the database, which returns the associated alternative argument values. The same applies for the argument types *"function identifier*" and *"parameter identifier*"*.*

At step 203, the user terminal 1 outputs a list of argument values comprising the first former argument value and the at least one alternative argument value, to enable the user to select one of the argument values in the list.

At step 204, a second user input is received on a current argument value of the outputted list of argument values. Again, no restriction is attached to the second user input, which can be a click or a double click on a press button, on a touch display using a finger or a pen, or a detection by a proximity sensor, an input on a wheel button, etc.

At step 205, the first former instruction is updated based on the first argument value selected by the user, to generate a new instruction. In case, the first argument value is the former argument value, then the first former instruction and the new instruction are identical. Else, the former argument value is replaced by the first argument value in the first former instruction to generate the new instruction.

At optional step 206, a validation window can be outputted by the user terminal to ask the user whether the new instruction is to be validated. This enables to reduce erroneous manipulations by the user.

At step 207, one of the connected objects 10.1-10.4 is remotely controlled using the new instruction.

For example, the first selectable element can be a device identifier and in that case, the first former argument value and the argument values of the list identify respective connected objects 10.1-10.4 of the user. Then, the connected object that is remotely controlled is identified by the current argument value.

Alternatively, the first selectable argument belongs to a type that differs from the device identifier type. In that case, the first former instruction further comprises a device identifier value and the device identifier value is included in the new instruction. The controlled connected object is therefore identified by the device identifier value. For example, the first selectable argument can be a function identifier, and the current argument value identifies a function to be performed by the controlled connected object. The first selectable argument can also be a parameter identifier.

No restriction is attached to the way the remote connected object is controlled : for example, the new instruction can be transmitted to the service platform 14 and the service platform 14 then forwards (and optionally modifies or enriches) it to the remote controlled connected object.

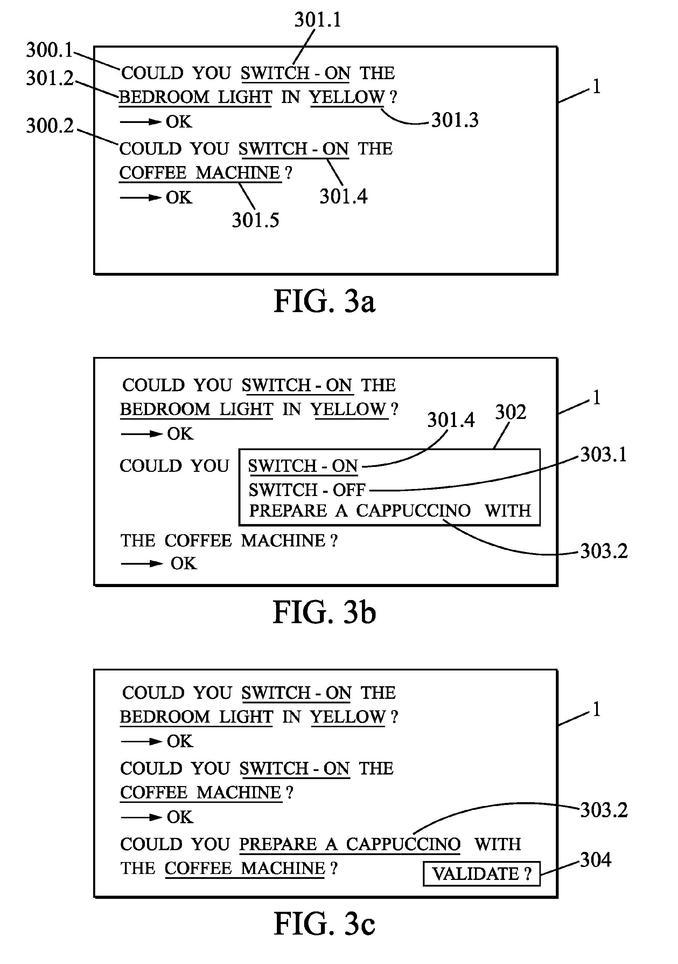

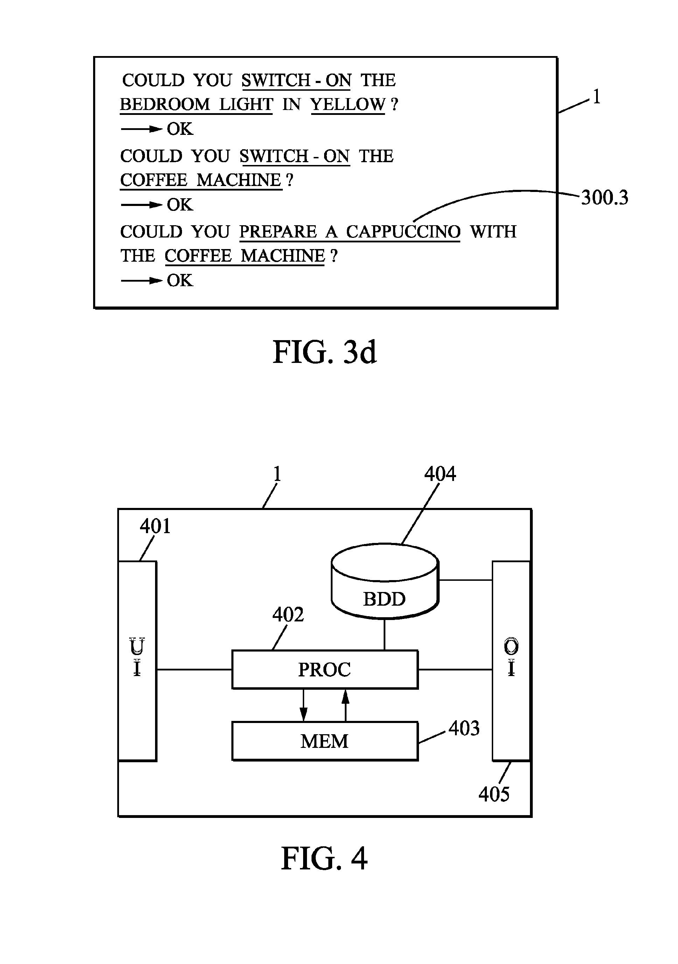

Figures 3a to 3d illustrate a user interface on the user terminal 1, according to some embodiments of the invention.

Referring to figure 3a, a history list is outputted on the user terminal 1 at step 200. The history list comprises two former instructions referenced 300.1 and 300.2.

Former instruction 300.1 comprises three arguments of three different argument types :
- a function identifier 301.1 having the function identifier value *"switch on*";
- a device identifier 301.2 having the device identifier value "*bedroom light*" 301.2; and
- a parameter identifier 301.3 having the parameter identifier value "*yellow*"*.*

Former instruction 300.2 comprises two arguments of two different argument types :
- a function identifier 301.4 having the function identifier value *"switch on*"; and
- a device identifier 301.8 having the device identifier value "*coffee machine"* 301.2.

Any of the elements may be a selectable argument according to the invention. For example, each argument among the arguments 301.1-301.5 may be a selectable argument.

As illustrated on figure 3b, the first selectable argument selected by the first user input at step 201 is the argument 301.4. The first selectable argument therefore belongs to the function identifier type, and the controlled connected object is the coffee machine 10.1.

A window 302 is then outputted at step 203, the window comprising the first selectable argument 301.4 and two alternative argument values, namely a function identifier value *"switch off' 303.1* and a function identifier value "*prepare a cappuccino with*" 303.2.

As illustrated on figure 3c, the user may select, via a second user input, the first argument value being the alternative function value "*prepare a cappuccino with*" 303.2. The former instruction 300.2 is then updated by replacing the function identifier value *"switch on*" 301.4 by the function identifier value "*prepare a cappuccino with",* to generate a new instruction.

An optional validation window 304 may be outputted at step 206 on the user terminal 1 so that the new instruction may be checked by the user before being used to control a remote connected object.

Upon validation by the user, the coffee machine 10.2 is remotely controlled to prepare a cappuccino and the new instruction is added to the history list.

By using the history list, the input of new instructions is facilitated and accelerated for the user of the user terminal 1. Indeed, using only two user inputs (two touch inputs for example), the user can generate a full instruction to control a remote device, the instruction identifying a device, a function to be performed and optionally a parameter.

Figure 4 shows an electronic device 1 (or user terminal 1) according to some embodiments of the invention.

The user terminal 1 comprises a random access memory 403 and a processor 402 that can store instructions for performing the steps of a method as described above when referring to figure 2.

The user terminal 1 may also comprise a database 404 for storing data resulting from the method according to the invention. For example, the database 404 may store the data that are retrieved from the database 13 (associations between the alternative argument values and the argument types, compatibility mesh) and can store user identifiers. According to an embodiment, the database 13 can be stored in the user terminal, in database 404.

The user terminal 1 comprises a user interface 401 for receiving selections and user inputs by the user. The user interface 401 can for example comprise a touch display, a virtual or physical keyboard, press buttons, a camera and/or a microphone coupled to a speech-to-text application. The user terminal 1 also comprises a network interface 405 to communicate with the network 12 and in particular to transmit the user entries to the selected connected objects. The network interface can be a wired interface (Ethernet) or wireless (Blueotooth, 2G, 3G, 4G, Wi-fi, etc).

## Claims

1. A method for managing a remote electronic device (10.1-10.4) using a user interface (401) on an electronic device (1), the method comprising:
outputting (200) on the electronic device a history list of former instructions (600.1;300.2), each former instruction comprising at least one selectable argument (301.1-301.5), said selectable argument having a former argument value;
receiving (201) a first user input on a first selectable argument of a first former instruction;
retrieving (202) at least one alternative argument value (303.1;303.2) for the first selectable argument of the first former instruction, the first selectable argument having a first former argument value;
outputting (203) a list of argument values comprising the first former argument value and the at least one alternative argument value;
receiving (204) a second user input on a current argument value of the outputted list of argument values;
updating (205) the first former instruction based on the first argument value to generate a new instruction;
remotely controlling (207) the remote electronic device using said new instruction.

2. The method according to claim 1, wherein, if the first selectable argument is a device identifier and the first former argument value and each of the argument values of the list identify respective electronic devices (10.1-10.4), then the controlled remote electronic device is identified by the current argument value.

3. The method according to claim 1 or 2, wherein, if the first selectable argument belongs to a first type of argument different from a device identifier type, and the first former instruction further comprises a device identifier value, then the device identifier value is included in the generated new instruction and the controlled remote electronic device is identified by the device identifier value.

4. The method according to claim 3, wherein the first type of argument is a function identifier type, and wherein the current argument value identifies a function to be performed by the remote electronic device.

5. The method according to one of the preceding claims, wherein controlling the remote electronic device comprises sending the new instruction to the remote electronic device.

6. The method according to claim 5, wherein, the new instruction is sent to the remote electronic device upon validation (206) by the user on the user interface.

7. A computer program product recorded on a storage medium and executable by a computer in the form of a software including at least one software module setup to implement the method according to any of claims 1 to 6.

8. An electronic device for managing a remote electronic device (10.1-10.4) using a user interface (401), the electronic device comprising:
a processor (402) configured to output on the user interface a history list of former instructions, each former instruction comprising at least one selectable argument, said selectable argument having a former argument value;
wherein the user interface configured to receive a first user input on a first selectable argument of a first former instruction, the first selectable argument having a first former argument value;
wherein the processor is further configured to retrieve at least one alternative argument value for the first selectable argument of the first former instruction and to output a list of argument values comprising the first former argument value and the at least one alternative argument value;
wherein the user interface is further configured to receive a second user input on a current argument value of the outputted list of argument values;
wherein the processor is further configured to update the first former instruction based on the current argument value to generate a new instruction and to remotely control the remote electronic device using said new instruction.
